(19) Europäisches Patentamt / European Patent Office / Office européen des brevets

(11) **EP 4 336 749 A1**

(12) **EUROPEAN PATENT APPLICATION**

(43) Date of publication:
**13.03.2024 Bulletin 2024/11**

(21) Application number: **23196362.0**

(22) Date of filing: **08.09.2023**

(51) International Patent Classification (IPC):
**H04B 10/079** (2013.01)    **H04B 10/2563** (2013.01)
**H04J 14/02** (2006.01)

(52) Cooperative Patent Classification (CPC):
**H04B 10/0795; H04B 10/2563; H04J 14/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.09.2022   US 202263404561 P**

(71) Applicant: **Marvell Asia Pte, Ltd.**
**Singapore 369522 (SG)**

(72) Inventors:
• **Mak, Gary**
**Santa Clara, 95050 (US)**
• **Patra, Lenin Kumar**
**Dublin, 94568 (US)**
• **Riani, Jamal**
**Fremont, 94539 (US)**

(74) Representative: **Grünecker Patent- und Rechtsanwälte**
**PartG mbB**
**Leopoldstraße 4**
**80802 München (DE)**

(54) **REDUCTION OF FOUR-WAVE MIXING CROSSTALK IN OPTICAL LINKS**

(57)     A transmitter includes at least three tunable laser sources, an optical multiplexer, and a processor. The at least three tunable laser sources are configured to receive respective data streams, and to output respective Tx light beams at different respective carrier frequencies, modulated with the respective data streams. The optical multiplexer is configured to combine the multiple Tx light beams to produce a combined beam formed of the modulated Tx light beams at the different carrier frequencies, and to transmit the combined beam over an optical fiber. The processor is configured to receive a notification indicative of an interference occurring due to Four-Wave Mixing (FWM) in the optical fiber, and to modify at least one of the carrier frequencies responsively to the notification in order to mitigate the interference due to FWM.

FIG. 1

EP 4 336 749 A1

**Description**

**CROSS-REFERENCE TO RELATED APPLICATIONS**

This application claims the benefit of U.S. Provisional Patent Application 63/404,561, filed September 8, 2022, whose disclosure is incorporated herein by reference.

**FIELD OF THE DISCLOSURE**

The present disclosure relates generally to data communication over optical fibers, and particularly to methods and systems for reduction of four-wave mixing crosstalk in communication over optical fibers.

**BACKGROUND**

In high-speed communication over an optical link, the overall throughput may be increased using Wavelength-Division Multiplexing (WDM) techniques. In optical WDM, multiple laser-emitted light beams having multiple respective different wavelengths are multiplexed onto a single optical fiber. The different wavelengths are multiplexed (combined) at the transmitter side and demultiplexed (split apart) at the receiver side.

WDM-based communication may be subjected to intermodulation interference occurring in nonlinear optics, referred to as a Four-Wave Mixing (FWM) interference. The FWM interference may cause crosstalk among the different light beams traversing the optical fiber, which may degrade data recovery performance of the receiver. In an IEEE publication entitled "On Technical Feasibility of 800G-LR4 with Direct-Detection," March 29, 2022, Rodes et al. suggest mitigating FWM interference by using nonequal spacing among the WDM wavelengths (or frequencies) in communication at 200G/lane over an optical fiber reaching 10Km.

The description above is presented as a general overview of related art in this field and should not be construed as an admission that any of the information it contains constitutes prior art against the present patent application.

**SUMMARY**

An embodiment that is described herein provides a transmitter that includes at least three tunable laser sources, an optical multiplexer, and a processor. The at least three tunable laser sources are configured to receive respective data streams, and to output respective Tx light beams at different respective carrier frequencies, modulated with the respective data streams. The optical multiplexer is configured to combine the multiple Tx light beams to produce a combined beam formed of the modulated Tx light beams at the different carrier frequencies, and to transmit the combined beam over an optical fiber. The processor is configured to receive a notification indicative of an interference occurring due to Four-Wave Mixing (FWM) in the optical fiber, and to modify at least one of the carrier frequencies responsively to the notification in order to mitigate the interference due to FWM.

In some embodiments, the notification includes instructions to adjust the at least one of the carrier frequencies. In other embodiments, the interference includes an interfering signal having a given frequency, and the notification is indicative of the given frequency of the interfering signal. In yet other embodiments, a far end of the optical fiber is coupled to a receiver that recovers the data streams from the combined beam, and the processor is configured to receive the notification from the receiver responsively to the receiver detecting the interference occurring due to FWM.

In an embodiment, the processor is configured to receive the notification over a sideband channel implemented as an in-band channel over the optical fiber.

There is additionally provided, in accordance with an embodiment that is described herein, a method for data transmission, including, in a transmitter including at least three tunable laser sources, receiving respective data streams, and outputting respective Tx light beams at different respective carrier frequencies, modulated with the respective data streams. The multiple Tx light beams are combined to produce a combined beam formed of the modulated Tx light beams at the different carrier frequencies, and the combined beam is transmitted over an optical fiber. A notification indicative of an interference occurring due to Four-Wave Mixing (FWM) in the optical fiber is received, and at least one of the carrier frequencies is modified responsively to the notification in order to mitigate the interference due to FWM.

There is additionally provided, in accordance with an embodiment that is described herein, a receiver that includes an optical de-multiplexer, a Front-End (FE) module, and a processor. The optical de-multiplexer is configured to receive from a transmitter, over an optical fiber, a combined beam that combines at least three modulated Tx light beams produced by at least three respective laser sources at different carrier frequencies, and to split the combined beam into at least three Rx light beams corresponding respectively to the modulated Tx light beams. The FE module is configured to convert the Rx light beams into corresponding Rx digital signals. The processor is configured to recover a data stream from each Rx digital signal while detecting interference in the Rx digital signal due to Four-Wave Mixing (FWM) in the optical fiber, and to send to the transmitter a notification indicative of the interference for adjusting one or more of the carrier frequencies in order to mitigate the interference due to FWM.

In some embodiments, the Rx digital signals belong to respective channel bands, and the processor is configured to detect the interference due to FWM by detecting interference having attributes corresponding to FWM falling in a given channel band associated with the Rx digital signal. In other embodiments, the processor is configured to include in the notification an indication of an attribute of the interference due to FWM enabling the transmitter to calculate an adjustment to a carrier frequency of at least one of the laser sources to cause interference due to FWM in subsequent transmitted signals to fall outside at least the given channel band. In yet other embodiments, the optical fiber is associated with a zero-dispersion frequency f0, and the processor is configured to include in the notification information indicative of a modification to be applied to one or more of the carrier frequencies to cause FWM to fall outside a specified frequency range that includes f0.

In an embodiment, the processor is configured to iteratively send multiple notifications to the transmitter to mitigate the interference, and after sending a given notification, to check whether the interference has reduced below a specified interference threshold. In another embodiment, the processor is configured to apply to the Rx digital signal an adaptive Feed-Forward Equalizer (FFE) filter including multiple taps, and to detect the interference depending at least on coefficient values of the taps.

There is additionally provided, in accordance with an embodiment that is described herein, a method for data reception, including, in a receiver, receiving from a transmitter over an optical fiber, a combined beam that combines at least three modulated Tx light beams produced by at least three respective laser sources at different carrier frequencies, and splitting the combined beam into at least three Rx light beams corresponding respectively to the modulated Tx light beams. The Rx light beams are converted into corresponding Rx digital signals. A data stream is recovered from each Rx digital signal while detecting interference in the Rx digital signal due to Four-Wave Mixing (FWM) in the optical fiber, and a notification indicative of the interference is sent to the transmitter for adjusting one or more of the carrier frequencies in order to mitigate the interference due to FWM.

There is additionally provided, in accordance with an embodiment that is described herein a system for data communication including a transmitter and a receiver. The transmitter includes at least three tunable laser sources, an optical multiplexer, and a processor. The at least three tunable laser sources are configured to receive respective data streams, and to output respective Tx light beams at different respective carrier frequencies, modulated with the respective data streams. The optical multiplexer is configured to combine the multiple Tx light beams to produce a combined beam formed of the modulated Tx light beams at the different carrier frequencies, and to transmit the combined beam over an optical fiber. The Tx processor is configured to receive a notification indicative of an interference occurring due to Four-Wave Mixing (FWM) in the optical fiber, and to modify at least one of the carrier frequencies responsively to the notification. The receiver includes an optical de-multiplexer coupled to the transmitter via the optical fiber, a Front-End (FE) module and an Rx processor. The optical de-multiplexer is configured to receive from a transmitter, over the optical fiber, the combined beam that combines the at least three modulated Tx light beams produced by the at least three respective laser sources at the different carrier frequencies, and to split the combined beam into at least three Rx light beams corresponding respectively to the modulated Tx light beams. The FE module is configured to convert the Rx light beams into corresponding Rx digital signals. The Rx processor is configured to recover a data stream from each Rx digital signal while detecting interference in the Rx digital signal due to Four-Wave Mixing (FWM) in the optical fiber, and to send to the transmitter the notification indicative of the interference for adjusting one or more of the carrier frequencies in order to mitigate the interference due to FWM.

The present disclosure will be more fully understood from the following detailed description of the embodiments thereof, taken together with the drawings in which:

## BRIEF DESCRIPTION OF THE DRAWINGS

Fig. 1 is a block diagram that schematically illustrates a communication system supporting four-wave mixing mitigation, in accordance with an embodiment that is described herein;
Fig. 2 is a block diagram that schematically illustrates data flow through a receiver channel, in accordance with an embodiment that is described herein;
Fig. 2A is a diagram that schematically illustrates a frequency response function that depends on the coefficients of the receiver FFE filter, when no FWM interference is present, in accordance with an embodiment that is described herein.
Figs. 2B and 2C are diagrams that each schematically illustrates a frequency response function that depends on the coefficients of the receiver FFE filter, when an FWM interference is present, in accordance with an embodiment that is described herein.

Figs. 3A-3D are diagrams that schematically illustrate a grid of equally spaced carrier frequencies that may result in FWM interference, and other example grids designed to mitigate FWM interference; and

Figs. 4A and 4B are flow charts that schematically illustrate transmitter and receiver methods for mitigating FWM interference, in accordance with embodiments that are described herein.

## DETAILED DESCRIPTION OF EMBODIMENTS

Embodiments that are described herein provide improved methods and systems for mitigating Four-Wave Mixing (FWM) crosstalk in optical fibers.

In Wavelength Division Multiplexing (WDM) communication, FWM impairments may occur due to interaction among three wavelengths that produces a new fourth wavelength traversing the optical fiber. Similarly, interaction between two wavelengths may result in two additional wavelengths. Each of the additional wavelengths caused by FWM may fall on or close to an original WDM wavelength, resulting in crosstalk interference.

In the present context, the term "close to" in frequency or in wavelength means that the frequencies or wavelengths in question fall within a specified frequency range or a specified wavelength range, respectively.

The frequency and wavelength of a light signal are related via the velocity of the light signal via the medium. In the description that follows the terms "wavelength" and "frequency" are used interchangeably.

Assume three frequencies denoted $F_i$, $F_j$ and $F_k$ interacting in a nonlinear medium to generate a fourth frequency denoted $F_{ijk}$. FWM may be classified as non-degenerate or degenerate. In non-degenerate FWM, $F_{ijk}$ is given by $F_{ijk}=F_i+F_j-F_k$, whereas in degenerate FWM, $F_{ijk}$ is given by $=F_{ijk}=2F_i-F_k$.

The light signal having a frequency $F_{ijk}$ caused by FWM is also referred to as a "FWM tone." A FWM tone may cause FWM interference when falling on or close to an original WDM wavelength. The description that follows focuses mainly of non-degenerate FWM of the form $F_{ijk}=F_i+F_j-F_k$, and on degenerate FWM of the form $F_{ijk}=2F_i-F_k$, which are dominant in causing FWM interference with WDM of four frequencies.

The magnitude or power of a FWM tone typically increases with the length of the optical fiber, meaning that the adverse effect of a FWM tone increases with the optical link length. For example, FWM becomes significant at fiber lengths of 3Km or even 10Km or more, which are commonly used, e.g., in data centers connectivity.

Chromatic dispersion refers to a phenomenon, according to which the velocity of a light wave propagating through the optical medium depends on the frequency or wavelength of that light wave. In communication over an optical fiber, dispersion may cause a light pulse carrying a WDM signal combining multiple carrier frequencies to broaden. This, in turn, degrades reception performance at the receiver. The amount of reception performance degradation due to dispersion is referred to as a "dispersion penalty," which typically increases with the overall frequency span of the WDM system.

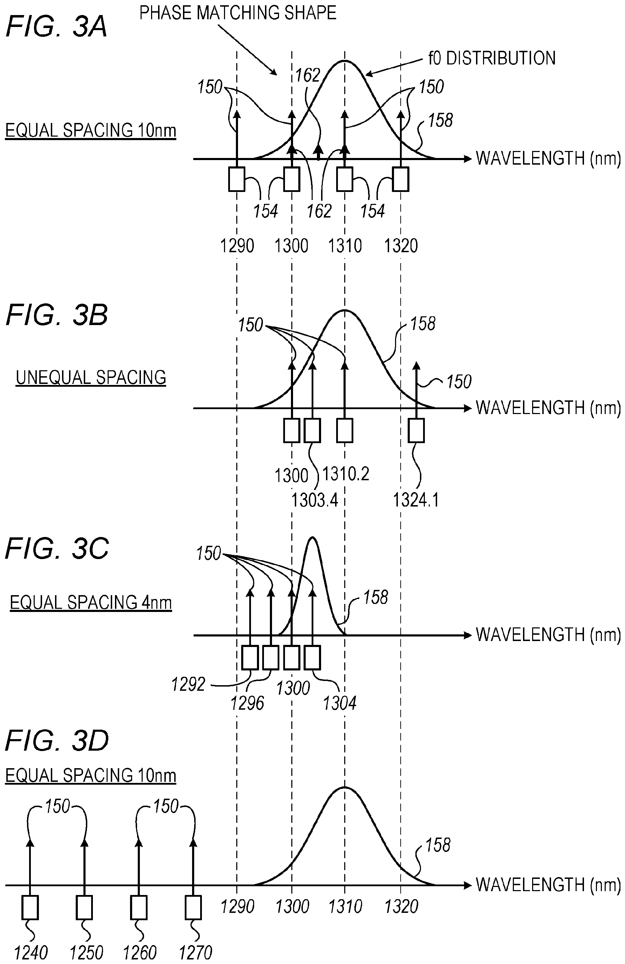

In a WDM system having four WDM wavelengths, worst-case FWM interference is generated when the WDM frequency grid is uniform (meaning that the gaps between adjacent WDM wavelengths are equal) and the Zero-Dispersion Frequency (ZDF - defined further below) is centered in the region between the two middle WDM wavelengths of the four WDM wavelengths. Such a WFM interference may be mitigated, for example, by moving all the four WDM wavelengths away from the ZDF point (as will be described in Fig. 3D below), but this solution would typically incur a very high dispersion penalty.

In the disclosed embodiments the WDM frequencies are set to reduce the probability of FWM interference. When FWM interference does occur, however, the cause of the FWM is identified, and the WDM frequencies are modified accordingly, to mitigate the FWM interference. Example embodiments to reduce the FWM probability will be described with reference to Figs. 3B and 3C below, including methods for identifying a FWM tone and mitigating its deleterious impact for both these examples.

An optical fiber typically is characterized by a Zero-Dispersion Frequency (ZDF) denoted "f0". When the wavelength of a light signal equals f0, the dispersion is zero. The value of f0 typically ranges between 1300nm and 1324nm across different optical fibers. With an evenly spaced grid, the effect of non-degenerate FWM is maximized when f0 is centered between WDM frequencies $F_i$ and $F_j$, whereas the effect of degenerate FWM is maximized when f0 equals $F_i$ or $F_j$. As f0 deviates from the f0 values that maximize the power of the FWM tone, the power of the FWM tone reduces significantly and therefore may no longer interfere with the WDM signal. For example, a reduction of at least 30dB in the power of the FWM tone typically is sufficient for mitigating FWM.

In the disclosed embodiments, the receiver detects FWM interference in the WDM signal. Based on the FWM interference, the receiver determines modified WDM frequencies to mitigate the FWM interference and notifies the transmitter to apply the modified frequencies. In embodiments according to one approach, the receiver adjusts the WDM frequencies so that all FWM tones fall outside the receiver channel bands. In an embodiment, the mitigation operation comprises a selection of spacings among the WDM carriers that statistically reduces the probability of FWM relative to other carrier spacings.

Consider a transmitter comprising at least three tunable laser sources, an optical multiplexer and a processor.

The at least three tunable laser sources are configured to receive respective data streams, and to output respective Tx light beams at different respective carrier frequencies, modulated with the respective data streams. The optical multiplexer is configured to combine the multiple Tx light beams to produce a combined beam formed of the modulated Tx light beams at the different carrier frequencies, and to transmit the combined beam over an optical fiber. The processor is configured to receive a notification indicative of an interference occurring due to Four-Wave Mixing (FWM) in the optical fiber, and to modify at least one of the carrier frequencies responsively to the notification in order to mitigate the interference due to FWM.

Modifying one or more WDM carrier frequencies causes a frequency shift to a corresponding FWM tone, thereby affecting the probability of the FWM causing interference. For a frequency shift having certain direction (shift the frequency up or down) and value (the amount of frequency shift), the probability of the FWM tone causing interference reduces significantly. As will be described further below, the proper shift direction and value for mitigating current and subsequent FWM interference may be found, e.g., by applying multiple frequency shift steps of one or more WDM carriers.

In some embodiments, the notification comprises instructions to adjust the at least one of the carrier frequencies. In an embodiment, the interference comprises an interfering signal having a given frequency, and the notification is indicative of the given frequency of the interfering signal.

In some embodiments, the far end of the optical fiber is coupled to a receiver that recovers the data streams from the combined beam. In such embodiments the processor is configured to receive the notification from the receiver responsively to the receiver detecting the interference occurring due to FWM.

In an embodiment, the processor is configured to receive the notification over a sideband channel. Example side channels will be described further below.

Next consider a receiver comprising an optical de-multiplexer, a Front-End (FE) module and a processor. The optical de-multiplexer is configured to receive from a transmitter, over an optical fiber, a combined beam that combines at least three modulated Tx light beams produced by at least three respective laser sources at different carrier frequencies, and to split the combined beam into at least three Rx light beams corresponding respectively to the modulated Tx light beams. The Front-End (FE) module is configured to convert the Rx light beams into corresponding Rx digital signals. The processor is configured to recover a data stream from each Rx digital signal while detecting interference in the Rx digital signal due to Four-Wave Mixing (FWM) in the optical fiber, and to send to the transmitter a notification indicative of the interference for adjusting one or more of the carrier frequencies in order to mitigate the interference due to FWM.

In some embodiments the notification indicative of the interference may comprise a message that includes an instruction from the receiver to the transmitter to modify the carrier frequencies in a specific manner, or a message that indicates a frequency of the FWM interference so that the transmitter can compute a necessary carrier frequency adjustment.

In some embodiments the Rx digital signals belong to respective channel bands, and the processor is configured to detect the interference due to FWM by detecting interference having attributes corresponding to FWM falling in a given channel band associated with the Rx digital signal. In an embodiment, the processor is configured to include in the notification an indication of an attribute of the interference due to FWM enabling the transmitter to calculate an adjustment to a carrier frequency of at least one of the laser sources to cause interference due to FWM in subsequent transmitted signals to fall outside at least the given channel band.

In an embodiment, modifying the carrier frequencies is carried out incrementally. In one such embodiment the processor is configured to iteratively send multiple notifications to the transmitter to mitigate the interference, and after sending a given notification, to check whether the interference has reduced below a specified interference threshold.

The receiver may detect the interference in various ways. In an example embodiment the processor is configured to apply to the Rx digital signal an adaptive Feed-Forward Equalizer (FFE) filter comprising multiple taps, and to detect the interference depending at least on coefficient values of the taps.

In the disclosed techniques, FWM interference that causes degradation to the reception performance is detected at the receiver and reported to the transmitter over a sideband channel. In an embodiment the sideband channel supports communication over a copper wire connection, such as an Ethernet connection, or over an optical connection, e.g., over optical fiber 28 in the direction from the receiver to the transmitter. Responsively to the reported FWM, the transmitter modifies the carrier frequencies so as to mitigate the FWM interference, thereby improving the reception performance. The disclosed embodiments are applicable in mitigating FWM interference in optical fibers of 10Km or more, which typically is impossible with known solutions. The modification to the carrier frequencies may be carried out iteratively until the FWM interference is sufficiently reduced. Modifying the carrier frequencies may also be used to compensate for performance degradation due to varying operational conditions or aging of the laser sources.

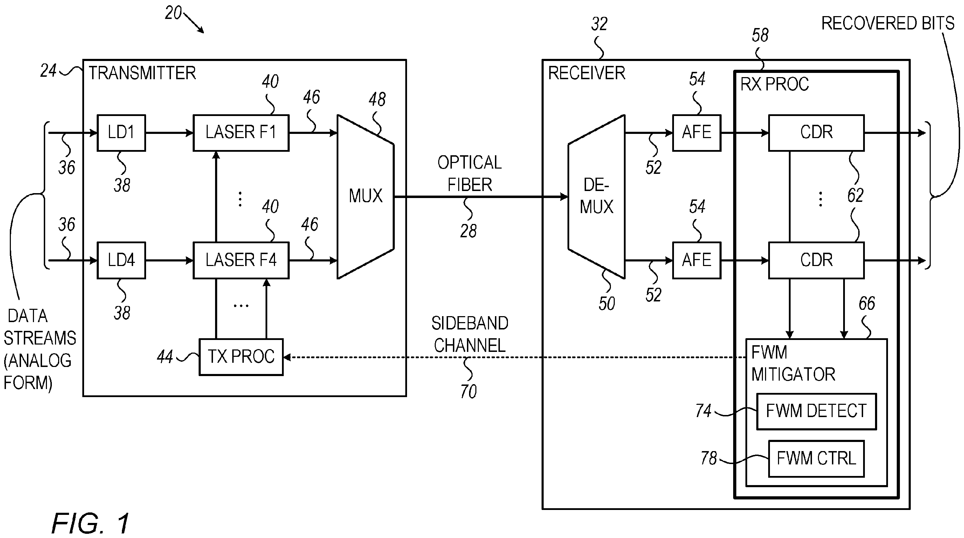

Fig. 1 is a block diagram that schematically illustrates a communication system 20 supporting four-wave mixing mitigation, in accordance with an embodiment that is described herein.

Communication system 20 comprises a transmitter (Tx) 24 coupled via an optical fiber 28 to a receiver (Rx) 32. Transmitter 24 receives multiple data streams 36 for transmission to receiver 32. In the present example, each of the data streams comprises a sequence of analog data symbols, each of which carrying multiple data bits in accordance with an underlying data modulation scheme. In an embodiment, the data bits are encoded using a suitable Error Correction Code (ECC) at the transmitter side. In the example of Fig. 1, Transmitter 24 receives four data streams in which bits are mapped to symbols, in accordance with a Pulse Amplitude Modulation 4 (PAM4) scheme. In alternative embodiments, a number of PAM data streams other than four, and/or a data modulation scheme other than PAM modulation can also be used.

Data streams 36 are provided via Laser Drivers (LDs) 38 to respective tunable laser sources 40. The laser source may comprise, for example, a tunable Distributed Feedback (DFB) laser, or any other suitable type of laser. The laser sources modulate the data streams over respective Tx light beams 46 having respective different carrier frequencies denoted F1...F4. Transmitter 24 comprises a Tx processor 44 that sets the carrier frequencies of the laser sources, e.g., in order to mitigate FWM interference, as will be described in detail below.

Transmitter 24 further comprises an optical multiplexer 48 that combines Tx light beams 46 emitted by the laser sources into a single combined beam, and transmits the combined beam to receiver 32 over optical fiber 28.

Receiver 32 receives the combined light beam from the optical fiber and splits it into multiple Rx light beams 52 (corresponding to respective Tx light beams 46 using an optical de-multiplexer 50. At the output of de-multiplexer 50, the Rx light beams belong to multiple respective nonoverlapping receiver channel bands. The Rx light beams are provided via Analog Front-End (AFE) modules 54 to an Rx processor 58, which comprises multiple Clock and Data Recovery (CDR) modules 62 and a FWM mitigator 66. Each AFE module 54 converts the Rx light beam it receives into an electrical Rx analog signal. CDR 62 recovers a local clock signal, digitizes the Rx analog signal into an Rx digital signal and processes the Rx digital signal to recover the corresponding data stream.

Receiver 32 further comprises a FWM mitigator 66, which comprises a FWM detector 74 and a FWM controller 78. The FWM detector receives from CDRs 62 control signals produced during the processing of the Rx digital signals. Based on the control signals, the FWM detector detects FWM interference in the Rx digital signals due to FWM in the optical fiber. Responsively to the FWM interference, the FWM controller determines carrier frequencies of laser sources 40 that are expected to mitigate the FWM interference. The FWM controller sends a notification reporting the FWM interference to Tx processor 44, e.g., over a sideband channel 70. Based on the notification, the transmitter reconfigures the carrier frequencies. Methods for mitigating FWM will be described in detail below.

In the description of Fig. 1, it was assumed that the receiver implements the task of determining the carrier frequencies for mitigating FWM, and notifies the transmitter of the modified carrier frequencies. In alternative embodiments, however, other task division between the transmitter and receiver can be used. For example, the receiver may notify the transmitter of the FWM detected, and the transmitter determines the modified carrier frequencies.

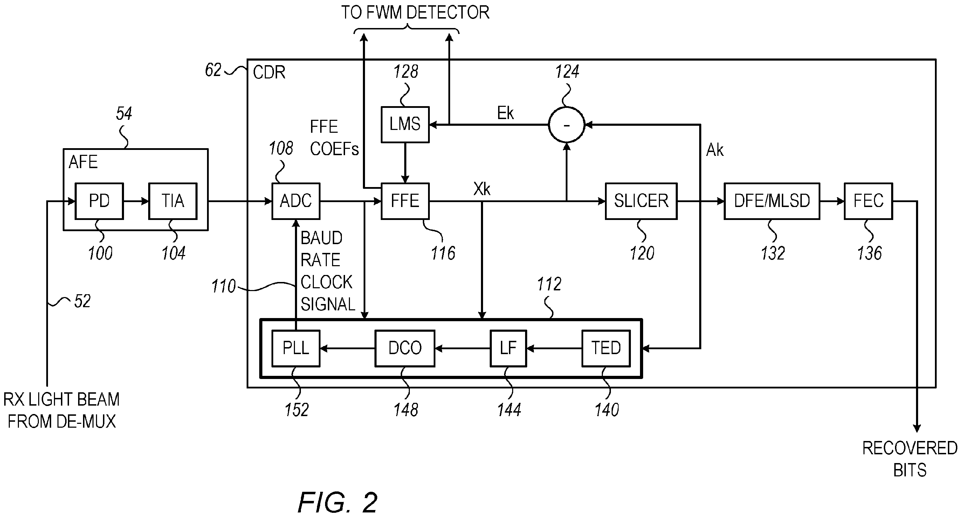

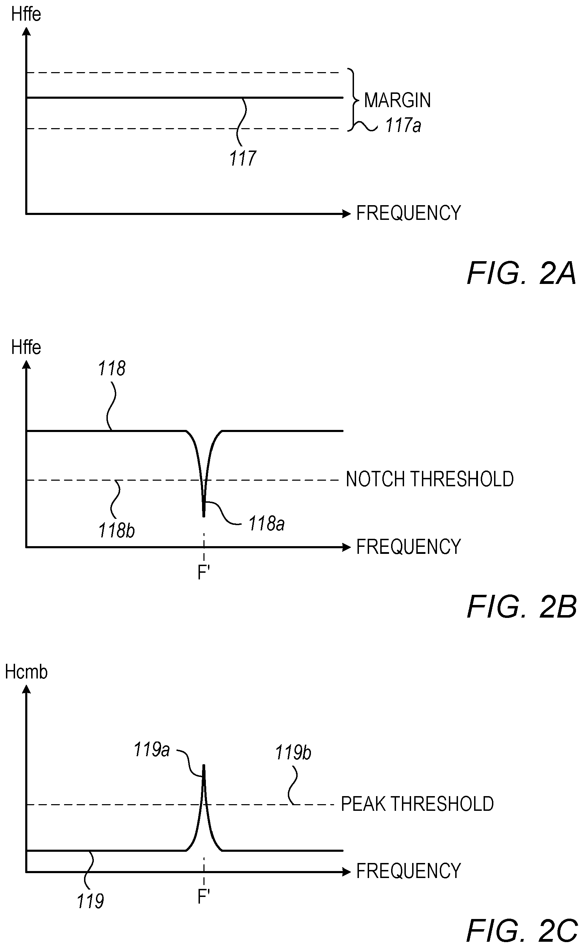

Fig. 2 is a block diagram that schematically illustrates data flow through a receiver channel, in accordance with an embodiment that is described herein.

In Fig. 2, AFE 54 comprises a photodiode (PD) 100 and a Transimpedance Amplifier (TIA) 104. PD 100 converts the light signal carried by Rx light beam 52 into an analog electrical signal, e.g., an electrical current signal. PD 100 may comprise any suitable type of photodiode such as, for example, a PIN photodiode. TIA 104 converts the electrical current signal output by the PD into an analog voltage signal, and provides the voltage signal to a CDR 62.

CDR 62 comprises an Analog to Digital Converter (ADC) 108 that using clock signal 110 samples the analog voltage signal output by the AFE, at the symbol baud rate, and converts the analog voltage samples into digital samples having a predefined number of bits (e.g., 12 bits) . Clock signal 110 is generated by clock recovery circuitry 112, as will be described below.

A Feed-Forward Equalizer (FFE) filter 116 receives the digital samples output by the ADC. The FFE filter comprises multiple taps, e.g., 30 taps in an embodiment, or any other suitable number of taps. The taps hold respective coefficient values of the FFE filter. In some embodiments, the coefficient values of FFE filter 116 are adaptable over time. The filtered digital samples at the output of the FFE filter are denoted $X_k$, wherein 'k' denotes a time index. A slicer 120 recovers from the digital samples $X_k$ respective symbols denoted $A_k$, using a suitable modulation scheme. In the present example, the data modulation scheme comprises a PAM4 modulation scheme, but other suitable modulation schemes can also be used. A subtractor 124 generates an error signal denoted $E_k$ given by $E_k=A_k-X_k$. A Least Mean Square (LMS) module 128 processes the error signal for adapting the coefficient values of the FFE taps, e.g., to compensate for an imperfect reception channel and impairments in the received signal.

The bits carried by the $A_k$ symbols are recovered by a Decision Feedback Equalizer (DFE) or a Maximum-Likelihood Sequence Detector (MLSD) 132, followed by a Forward Error Correction (FEC) decoder 136. The FEC decoder decodes an Error Correction Code (ECC) used for encoding the bits at the transmitter side, to recover the uncoded bits.

Clock recovery circuitry 112 recovers clock signal 110 (frequency and phase) for sampling the ADC as noted above. The clock recovery circuitry comprises a Timing Error Detector (TED) 140 that detects timing errors in sampling the analog signal input to the ADC. A Loop Filter (LF) 144 filters the timing error signal produced by the TED. The filtered timing error signal is provided to a Digitally Controlled Oscillator (DCO) 148 followed by a Phase-Locked Loop (PLL) module 152 that outputs clock signal 110.

In some embodiments, the CDR provides one or more control signals to the FWM mitigator for detecting FWM interferences. In the present example, the CDR provides to the FWM mitigator the current values of the FFE coefficients, and the error signal Ek. In some embodiments the CDR optionally also provides the Ak signal to the FWM mitigator (not shown), e.g., for improved robustness and to eliminate large error values and error bursts.

Reference is now made to Figs. 2A-2C.

Fig. 2A is a diagram that schematically illustrates a frequency response function that depends on the coefficients of the receiver FFE filter, when no FWM interference is present, in accordance with an embodiment that is described herein.

Figs. 2B and 2C are diagrams that each schematically illustrates a frequency response function that depends on the coefficients of the receiver FFE filter, when an FWM interference is present, in accordance with an embodiment that is described herein.

FFE filter 116 is associated with a Frequency Response Function (FRF) that depends on the coefficient values. Let Hffe 117 denote the FRF of the FFE filter. When the Hffe magnitude is close to flat as in Figs. 2A (e.g., within a specified magnitude margin 117a), the underlying receiver channel band is assumed to contain no FWM interference. In contrast, when the magnitude of Hffe 118 as in Fig. 2B contains a deep notch 118a at a given frequency (denoted F'), it is assumed that a FWM interference falls within the channel band, at the given frequency denoted F'.

FWM detector 74 may identify a FWM interference in various ways. In one embodiment, the FWM detector calculates the FRF of FFE filter 116 (Hffe) based on the coefficient values of the FFE filter. The FWM detector analyses Hffe and identifies a FWM interference at a given frequency when the Hffe has a notch at the given frequency, and the notch magnitude is lower than a specified threshold notch magnitude (Fig. 2B). In another embodiment, the FWM detector calculates the FRF of the error signal Ek, denoted Herr, and calculates a combined FRF Hcmb 119 given by Hcmb=Herr·(1/Hffe). The FWM detector detects a FWM interference at a given frequency F', when the magnitude of Hcmb has a peak 119a at the given frequency F', and the peak has a magnitude higher than a specified peak threshold magnitude 119b.

In some embodiments the detected interference has attributes corresponding to FWM falling in a given channel band associated with the underlying Rx digital signal, e.g., the frequency of the FWM tone, the magnitude of the FWM tone, and the like.

In some embodiments the FWM mitigator includes the detected given frequency F' in the notification to the transmitter as an attribute of the interference due to FWM, which enables the transmitter to calculate an adjustment to a carrier frequency of at least one of the laser sources so as to cause interference due to FWM in subsequent transmitted signals to fall outside at least the relevant channel band.

In some embodiments, the FWM detector calculates Hffe and Herr using a suitable time-frequency transform function, such as, for example, a Fast Fourier Transform (FFT). In an embodiment, the FWM detector calculates smoothed Hffe and Herr FRFs by averaging over multiple Hffe FRFs and over multiple Herr FRFs before seeking for a notch or a peak.

Figs. 3A-3D are diagrams that schematically illustrate a grid of equally spaced carrier frequencies that may result in FWM interference, and other example grids designed to mitigate FWM interference.

Each of Figs. 3A-3D depicts four different carrier wavelengths 150 that may be used by the laser sources (e.g., 40) in a WDM system such as communication system 20 of Fig. 1.

Fig. 3A depicts carrier wavelengths set to 1290nm, 1300nm, 1310nm, and 1320nm, in accordance with an embodiment that is described herein. In this example the carrier wavelengths are equally spaced with a common gap of 10nm between adjacent carrier wavelengths. The corresponding carrier frequencies belong to respective channel bands 154. A curve 158, depicts a probability density function of the Zero-Dispersion Frequency (ZDF) f0 over multiple different optical fibers. In the present example f0 is distributed in accordance with a Gaussian distribution having a mean value of 1310nm and a standard variation value of 800 GHz.

As noted above, a FWM interference typically occurs when f0 is aligned (or close to within a specified frequency range) to a carrier frequency, or to an average frequency between two carrier frequencies. In the present example, FWM may occur when f0 falls at one of wavelengths 162. As shown in Fig. 3A, a FWM interference may occur at a carrier wavelength of 1310nm with a high probability, and with a much lower probability at a carrier wavelength of 1300nm.

Fig. 3B depicts a grid of carrier wavelengths with nonequal spacing, in accordance with an embodiment that is described herein. In the present example, the carrier wavelengths are 1300.0nm, 1303.4nm, 1310.2nm, 1324.1nm, as suggested by Rodes et al. in the IEEE publication cited above. With this spacing plan, the FWM tones fall outside the channel bands and therefore cause no interference (regardless of the value of f0).

Fig. 3C depicts a grid of carrier wavelengths with equal wavelength spacing of 4nm, in accordance with an embodiment that is described herein. In the present example the carrier wavelengths are given by 1292nm, 1296nm, 1300nm and 1304nm. In this example, the Gaussian distribution of f0 is centered about 1304nm, the carrier wavelength of 1300nm is located at the distribution function tail, and the carrier wavelengths of 1292nm and 1296nm fall far below the distribution function tail (and are therefore not at risk of FWM). Using this grid, the probability of FWM interference at 1300nm reduces significantly compared to the grid of Fig. 3A above because the probability of f0 falling close to the 1300nm wavelength is very small. Moreover, by reducing the spacing from 10nm (in Fig. 3A) to 4nm (in Fig. 3C), the dispersion penalty reduces as well, which improves reception quality.

Fig. 3D depicts a grid of carrier wavelengths with equal wavelength spacing of 10nm, in accordance with an embodiment that is described herein. In this example the carrier wavelengths are given by 1240nm, 1250nm, 1260nm and 1260nm. With this grid, all the carrier wavelengths fall well below the left tail of the f0 density function, thus eliminating FWM interference. The dispersion penalty increases, however, compared to the grid of Fig. 3C, because of the increased spacing.

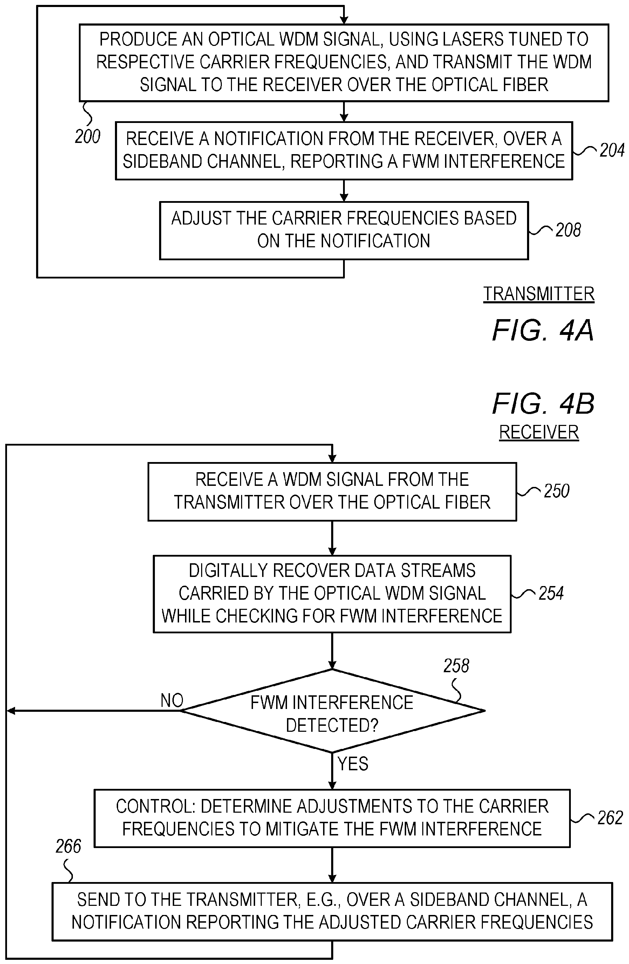

Figs. 4A and 4B are flow charts that schematically illustrate transmitter and receiver methods for mitigating FWM interference, in accordance with embodiments that are described herein.

The transmitter method of Fig. 4A and the receiver method of Fig. 4B will be described as executed by transmitter 24 and receiver 32 of Fig. 1, which are interconnected using optical fiber 28. The methods of Figs. 4A and 4B are assumed to operate in parallel to one another.

The method of Fig. 4a begins, at a transmission operation 200, with transmitter 24 producing an optical WDM signal using lasers tuned to respective carrier frequencies and transmitting the WDM signal to the receiver over the optical fiber. The carrier frequencies may be initialized to predefined default frequencies and later re-tuned as will be described below. The WDM signal transmitted combines the carrier frequencies, which are modulated with data streams.

At a notification reception operation 204, the transmitter receives a notification from the receiver, e.g., over a sideband channel, reporting a FWM interference. In an example embodiment, the notification includes instructions for the transmitter to modify one or more of the carrier frequencies in order to mitigate the FWM interference. In an embodiment the interference comprises an interfering signal having a given frequency, and the notification is indicative of the given frequency of the interfering signal. In one example embodiment, the sideband channel is implemented as an in-band digital channel over optical fiber 28, by allocating dedicated bits in the underlying frames for End-to-End (E2E) communication. In another embodiment, the sideband channel is implemented as an in-band analog channel over optical fiber 28, using Subcarrier Multiplexing (SCM) techniques. In yet another embodiment, the sideband channel may be implemented as a customer sideband channel via Ethernet independent of the optical fiber.

At a frequency adjustment operation 208, the transmitter modifies the carrier frequencies based on the received notification, and loops back to operation 200 to produce and transmit another WDM signal.

The method of Fig. 4B begins at a signal reception operation 250, with receiver 32 receiving a WDM signal from transmitter 24 over the optical fiber. The WDM signal carries multiple carrier frequencies modulated with data streams. At a data recovery operation 254, the receiver digitally recovers the data carried by the WDM signal while checking for FWM interference in one or more of the receiver channels. In an embodiment, the receiver checks for FWM interference using FWM detector 74 described above.

At a query operation 258, the receiver checks whether a FWM interference has been detected, and if not, loops back to operation 250 to receive another WDM signal. For example, the receiver detects the FWM interference by detecting that the interference falls in a given channel band associated with the relevant Rx digital signal. Otherwise, the receiver proceeds to a control operation 262, at which the receiver determines adjustments to be applied to the carrier frequencies to mitigate the FWM interference. At a notification sending operation 266, the receiver produces a notification reporting the adjusted carrier frequencies, and sends the notification to the transmitter, e.g., over a sideband channel. Following operation 266, the method loops back to operation 250 to receive another WDM signal.

The methods of Figs. 4A and 4B are given by way of example and other suitable methods can also be used. For example, at least part of the control functionality implemented at operation 262 may be carried out by the transmitter rather than in the receiver.

Referring to the example in Fig 3B, next is described a method for identifying a combination of carrier frequencies causing FWM interference. The method will be described as executed by FWM mitigator 66. Consider an example grid of carrier frequencies with nonequal spacing, specified by relative frequencies [0, 600, 1800, 4200] (GHz), as in the example of Fig. 3B above. Table 1 summarizes carrier frequency combinations that may generate a FWM tone at a relative frequency Fijk of -600 GHz.

Table 1: Combinations of carrier frequencies with nonequal spacings causing a FWM tone.

|  | Fi (GHz) | Fj (GHz) | Fk (GHz) | Fijk (GHz) | FWM type |
|---|---|---|---|---|---|
| COMB1 | 0 | 0 | 600 | -600 | Degenerate |
| COMB2 | 600 | 600 | 1800 | -600 | Degenerate |
| COMB3 | 1800 | 1800 | 4200 | -600 | Degenerate |

The frequency of the FWM tone is given by $F_{ijk} = F_i + F_j - F_k$. In the degenerate FWM case, $F_{ijk}$ is given by $F_{ijk} = 2F_i - F_j$ or $F_{ijk} = 2F_j - F_k$. In a matrix form the frequencies participating in each combination is given by:

*Equation 1:*

$$FWM\_SET = \begin{bmatrix} 2 & -1 & 0 & 0 \\ 0 & 2 & -1 & 0 \\ 0 & 0 & 2 & -1 \end{bmatrix}$$

wherein the matrix rows refer to the three combinations and the matrix columns refer to the carrier frequencies F1...F4. FWM controller 78 may manipulate the matrix in Equation 1 to produce a reduced echelon form matrix given by:

*Equation 2:*

$$FWM\_ECHELON = \begin{bmatrix} 1 & 0 & 0 & -0.125 \\ 0 & 1 & 0 & -0.25 \\ 0 & 0 & 1 & -0.5 \end{bmatrix}$$

Since the left-side submatrix comprises a unity matrix, knowledge of F1, F2 and F3 is sufficient for determining the actual combination causing the FWM tone.

It is noted that shifting the carrier frequencies by respective shift values denoted d(Fi), d (Fj) and d (Fk) would result in shifting the FWM tone by a shift value denoted d(Fijk) given by d(Fijk)=d(Fi)+d(Fj)-d(Fk). For example, shifting only F1 by d (F1) =1 causes a shift d(Fijk)=2 in COMB1 and no shift, i.e., d(Fijk)=0, in each of COMB2 and COMB3. Shifts d(Fijk) in the FWM tome corresponding to shifts d(F1), d(F2) and d(F3) are summarized in a matrix given by:

*Equation 3:*

$$Fijk\_SHIFT = \begin{bmatrix} 2 & -1 & 0 \\ 0 & 2 & -1 \\ 0 & 0 & 2 \end{bmatrix}$$

wherein the matrix rows refer to the three combinations and the matrix columns refer to shifts in the carrier frequencies F1, F2 and F3.

In an embodiment, the FWM controller further manipulates the matrix in Equation 3 to indicate nonzero elements as given by:

*Equation 4:*

$$Fijk\_SHIFT\_NORM = \begin{bmatrix} 1 & 1 & 0 \\ 0 & 1 & 1 \\ 0 & 0 & 1 \end{bmatrix}$$

In the present example, FWM controller 78 identifies the combination causing the -600 FWM tone by notifying transmitter 24 to shift F1 and optionally shift F2. After notifying the transmitter to shift one carrier frequency, the FWM controller checks (e.g., using FWM detector 74) whether the frequency of the FWM tone has changed responsively to the F1 shift, and makes a decision accordingly. If shifting F1 alone causes a shift in the FWM tone, the FWM controller decides that COMB1 is the combination causing the FWM tone. Otherwise, the FWM controller notifies the transmitter to shift F2 alone, and checks for a shift in the FWM tone. If the FWM tone has shifted responsively to the F2 shift, the FWM controller decides that COMB2 is the combination causing the FWM tone, and if not, COMB3 is the combination causing the FWM tone.

After the FWM controller identifies one of the combinations as described above, the FWM controller notifies the transmitter to adjust one or more of the carrier frequencies, in an embodiment. For example, the FWM controller manages a control loop for iteratively adjusting the carrier frequencies until the FWM interference is eliminated or reduced below a specified interference threshold.

The control loop may be implemented as part of the method of Fig. 4B within operation 262. The control loop method begins with the FWM controller determining the shift direction required for reducing the FWM interference. For example, try modifying a carrier frequency to a higher or lower frequency value, and check whether the amplitude of the FWM tone has reduced responsively to the modification. In subsequent iterations, continue with the last direction that reduced the amplitude of the FWM tone. In an embodiment, the FWM controller uses a predefined shift value. Alternatively, the FWM controller may adjust the shift value during the iterations.

Given the total shift value (e.g., for the current iteration), the FWM controller may apportion the total shift value amongst the carrier frequencies Fi, Fj and Fk in various ways. In one embodiment, the FWM controller divides the total shift value equally among the carrier frequencies. Alternatively, the FWM controller divides the total shift value unevenly, e.g., assigns the total shift to only one of the carrier frequencies. The FWM controller may determine the actual apportion depending on the current statuses of the lasers involved, wherein the laser status depends, for example, on manufacturing tolerance, operating temperature, aging, receiver channel bandwidth, and the like. After deciding on the frequency shifts assigned to the carrier frequencies, the FWM controller notifies the transmitter of the modified carrier frequencies, and checks whether the FWM tone is still detected or has been moved outside the underlying receiver channel band. When the FWM tone is still detected, the FWM controller may apply a subsequent iteration as described above.

Referring to Fig 3C, next is described another method for mitigating FWM interference for a grid of carrier frequencies with equal spacing of 4nm. The carrier wavelengths in this example are given by [1292, 1296, 1300, 1304] (nm), as in Fig. 3C above. The corresponding relative frequencies are given by [-1200, -400, 400, 1200] (GHz), with a spacing of 800 GHz. Table 2 summarizes the carrier frequency combinations that may result in respective FWM tones at relative frequencies of 400 GHz, -1200 GHz and -400 GHz, respectively. The present example is related to the equally spaced grid of carrier frequencies depicted in Fig. 3C above, in which case FWM interference at 1300 nm occurs in the underlying optical fiber with a relatively low probability.

Table 2: Combinations of carrier frequencies with an equally spaced grid causing a FWM tone.

|       | Fi (GHz) | Fj (GHz) | Fk (GHz) | Fijk (GHz) | FWM type |
|-------|----------|----------|----------|------------|----------|
| COMB1 | -400     | -400     | -1200    | 400        | Degenerate |
| COMB2 | -400     | -400     | 400      | -1200      | Degenerate |
| COMB3 | -1200    | 400      | -400     | -400       | Non-Degen. |

In this example, the left tail of the f0 probability density function is located near the 1300nm carrier (relative frequency 400 GHz) as shown in Fig. 3C. Consequently, the probability that a FWM tone at a relative frequency of 400 GHz will cause interference is low for any underlying optical fiber used. If a FWM interference does occur, however, at a relative frequency 400 GHz, the FWM tone may be shifted by modifying one or more of the other carrier frequencies, e.g., using a control loop method as described above. For example, the FWM controller notifies the transmitter to shift all four carrier frequencies to lower frequency values, while retaining the grid spacing unmodified.

The configurations of communication system 20 including transmitter 24 and receiver 32 in Fig. 1, and CDR 62 in Fig. 2 are given by way of example, and other suitable communication system, transmitter, receiver and CDR configurations can also be used.

The different elements of communication system 20, transmitter 24, receiver 32 and CDR 62 and their components such as FWM mitigator 66 may be implemented using dedicated hardware or firmware, such as using hardwired or programmable logic, e.g., in an Application-Specific Integrated Circuit (ASIC) or Field-Programmable Gate Array (FPGA). Additionally or alternatively, some functions of FWM mitigator 66, e.g., functions of FWM detector 74 and FWM controller 78 may be implemented in software and/or using a combination of hardware and software elements. Elements that are not mandatory for understanding of the disclosed techniques have been omitted from the figures for the sake of clarity.

In some embodiments, some functions of receiver 32, e.g., FWM mitigator 66, may be implemented in a programmable processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

The embodiments described above are given by way of example, and other suitable embodiments can also be used. For example, although some of the embodiments above focus on a WDM having four wavelengths, the disclosed embodiments are similarly applicable to WDM with a number of wavelengths larger than four.

It is noted that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

**Embodiments**

Embodiment 1: A transmitter, comprising:

at least three tunable laser sources, configured to receive respective data streams, and to output respective Tx light beams at different respective carrier frequencies, modulated with the respective data streams;

an optical multiplexer, configured to combine the multiple Tx light beams to produce a combined beam formed of the modulated Tx light beams at the different carrier frequencies, and to transmit the combined beam over an optical fiber; and

a processor, configured to receive a notification indicative of an interference occurring due to Four-Wave Mixing (FWM) in the optical fiber, and to modify at least one of the carrier frequencies responsively to the notification in order to mitigate the interference due to FWM.

Embodiment 2: The transmitter according to embodiment 1, wherein the notification comprises instructions to adjust the at least one of the carrier frequencies.

Embodiment 3: The transmitter according to embodiment 1, wherein the interference comprises an interfering signal having a given frequency, and wherein the notification is indicative of the given frequency of the interfering signal.

Embodiment 4: The transmitter according to embodiment 1, wherein a far end of the optical fiber is coupled to a receiver that recovers the data streams from the combined beam, and wherein the processor is configured to receive the notification from the receiver responsively to the receiver detecting the interference occurring due to FWM.

Embodiment 5: The transmitter according to embodiment 1, wherein the processor is configured to receive the notification over a sideband channel implemented as an in-band channel over the optical fiber.

Embodiment 6: A method for data transmission, comprising:

in a transmitter comprising at least three tunable laser sources, receiving respective data streams, and outputting respective Tx light beams at different respective carrier frequencies, modulated with the respective data streams;

combining the multiple Tx light beams to produce a combined beam formed of the modulated Tx light beams at the different carrier frequencies, and transmitting the combined beam over an optical fiber; and

receiving a notification indicative of an interference occurring due to Four-Wave Mixing (FWM) in the optical fiber, and modifying at least one of the carrier frequencies responsively to the notification in order to mitigate the interference due to FWM.

Embodiment 7: The method for data transmission according to embodiment 6, wherein the notification comprises instructions to adjust the at least one of the carrier frequencies.

Embodiment 8: The method for data transmission according to embodiment 6, wherein the interference comprises an interfering signal having a given frequency, and wherein the notification is indicative of the given frequency of the interfering signal.

Embodiment 9: The method for data transmission according to embodiment 6, wherein a far end of the optical fiber is coupled to a receiver that recovers the data streams from the combined beam, and wherein receiving the notification comprises receiving the notification from the receiver responsively to the receiver detecting the interference occurring due to FWM.

Embodiment 10: The method for data transmission according to embodiment 6, wherein receiving the notification comprises receiving the notification over a sideband channel implemented as an in-band channel over the optical fiber.

Embodiment 11: A receiver, comprising,

an optical de-multiplexer, configured to receive from a transmitter, over an optical fiber, a combined beam that combines at least three modulated Tx light beams produced by at least three respective laser sources at different carrier frequencies, and to split the combined beam into at least three Rx light beams corresponding respectively to the modulated Tx light beams;

a Front-End (FE) module, configured to convert the Rx light beams into corresponding Rx digital signals; and

a processor, configured to recover a data stream from each Rx digital signal while detecting interference in the Rx digital signal due to Four-Wave Mixing (FWM) in the optical fiber, and to send to the transmitter a notification indicative of the interference for adjusting one or more of the carrier frequencies in order to mitigate the interference due to FWM.

Embodiment 12: The receiver according to embodiment 11, wherein the Rx digital signals belong to respective channel bands, and wherein the processor is configured to detect the interference due to FWM by detecting interference having attributes corresponding to FWM falling in a given channel band associated with the Rx digital signal.

Embodiment 13: The receiver according to embodiment 12, wherein the processor is configured to include in the notification an indication of an attribute of the interference due to FWM enabling the transmitter to calculate an adjustment to a carrier frequency of at least one of the laser sources to cause interference due to FWM in subsequent transmitted signals to fall outside at least the given channel band.

Embodiment 14: The receiver according to embodiment 11, wherein the optical fiber is associated with a zero-dispersion frequency to, and wherein the processor is configured to include in the notification information indicative of a modification to be applied to one or more of the carrier frequencies to cause FWM to fall outside a specified frequency range that includes to.

Embodiment 15: The receiver according to embodiment 11, wherein the processor is configured to iteratively send multiple notifications to the transmitter to mitigate the interference, and after sending a given notification, to check whether the interference has reduced below a specified interference threshold.

Embodiment 16: The receiver according to embodiment 11, wherein the processor is configured to apply to the Rx digital signal an adaptive Feed-Forward Equalizer (FFE) filter comprising multiple taps, and to detect the interference depending at least on coefficient values of the taps.

Embodiment 17: A method for data reception, comprising,

in a receiver, receiving from a transmitter over an optical fiber, a combined beam that combines at least three modulated Tx light beams produced by at least three respective laser sources at different carrier frequencies, and splitting the combined beam into at least three Rx light beams corresponding respectively to the modulated Tx light beams;

converting the Rx light beams into corresponding Rx digital signals; and

recovering a data stream from each Rx digital signal while detecting interference in the Rx digital signal due to Four-Wave Mixing (FWM) in the optical fiber, and sending to the transmitter a notification indicative of the interference for adjusting one or more of the carrier frequencies in order to mitigate the interference due to FWM.

Embodiment 18: The method for data reception according to embodiment 17, wherein the Rx digital signals belong to respective channel bands, and comprising detecting the interference due to FWM by detecting interference having attributes corresponding to FWM falling in a given channel band associated with the Rx digital signal.

Embodiment 19: The method for data reception according to embodiment 18, and comprising including in the notification an indication of an attribute of the interference due to FWM enabling the transmitter to calculate an adjustment to a carrier frequency of at least one of the laser sources to cause interference due to FWM in subsequent transmitted signals to fall outside at least the given channel band.

Embodiment 20: The method for data reception according to embodiment 17, wherein the optical fiber is associated with a zero-dispersion frequency to, and comprising including in the notification information indicative of a modification to be applied to one or more of the carrier frequencies to cause FWM to fall outside a specified frequency range that includes to.

Embodiment 21: The method for data reception according to embodiment 17, and comprising iteratively sending multiple notifications to the transmitter to mitigate the interference, and after sending a given notification, checking whether the interference has reduced below a specified interference threshold.

Embodiment 22: The method for data reception according to embodiment 17, and comprising applying to the Rx digital signal an adaptive Feed-Forward Equalizer (FFE) filter comprising multiple taps, and detecting the interference depending at least on coefficient values of the taps.

Embodiment 23: A system for data communication comprising:

a transmitter, comprising,

at least three tunable laser sources, configured to receive respective data streams, and to output respective Tx light beams at different respective carrier frequencies, modulated with the respective data streams;

an optical multiplexer, configured to combine the multiple Tx light beams to produce a combined beam formed of the modulated Tx light beams at the different carrier frequencies, and to transmit the combined beam over an optical fiber; and

a Tx processor, configured to receive a notification indicative of an interference occurring due to Four-Wave Mixing (FWM) in the optical fiber, and to modify at least one of the carrier frequencies responsively to the notification; and

a receiver, comprising,

an optical de-multiplexer coupled to the transmitter via the optical fiber, configured to receive from the transmitter, over the optical fiber, the combined beam that combines the at least three modulated Tx light beams produced by the at least three respective laser sources at the different carrier frequencies, and to split the combined beam into at least three Rx light beams corresponding respectively to the modulated Tx light beams;

a Front-End (FE) module, configured to convert the Rx light beams into corresponding Rx digital signals; and

a Rx processor, configured to recover a data stream from each Rx digital signal while detecting interference in the Rx digital signal due to Four-Wave Mixing (FWM) in the optical fiber, and to send to the transmitter the notification indicative of the interference for adjusting one or more of the carrier frequencies in order to mitigate the interference due to FWM.

**Claims**

1. A transmitter, comprising:

at least three tunable laser sources, configured to receive respective data streams, and to output respective Tx light beams at different respective carrier frequencies, modulated with the respective data streams;
an optical multiplexer, configured to combine the multiple Tx light beams to produce a combined beam formed of the modulated Tx light beams at the different carrier frequencies, and to transmit the combined beam over an optical fiber; and
a processor, configured to receive a notification indicative of an interference occurring due to Four-Wave Mixing (FWM) in the optical fiber, and to modify at least one of the carrier frequencies responsively to the notification in order to mitigate the interference due to FWM.

**2.** The transmitter according to claim 1, wherein the notification comprises instructions to adjust the at least one of the carrier frequencies.

**3.** The transmitter according to claim 1 or 2, wherein the interference comprises an interfering signal having a given frequency, and wherein the notification is indicative of the given frequency of the interfering signal.

**4.** The transmitter according to one of claims 1 to 3, wherein a far end of the optical fiber is coupled to a receiver that recovers the data streams from the combined beam, and wherein the processor is configured to receive the notification from the receiver responsively to the receiver detecting the interference occurring due to FWM; or
wherein the processor is configured to receive the notification over a sideband channel implemented as an in-band channel over the optical fiber.

**5.** A method for data transmission, comprising:

in a transmitter comprising at least three tunable laser sources, receiving respective data streams, and outputting respective Tx light beams at different respective carrier frequencies, modulated with the respective data streams;
combining the multiple Tx light beams to produce a combined beam formed of the modulated Tx light beams at the different carrier frequencies, and transmitting the combined beam over an optical fiber; and
receiving a notification indicative of an interference occurring due to Four-Wave Mixing (FWM) in the optical fiber, and modifying at least one of the carrier frequencies responsively to the notification in order to mitigate the interference due to FWM.

**6.** The method for data transmission according to claim 5, wherein the notification comprises instructions to adjust the at least one of the carrier frequencies.

**7.** The method for data transmission according to claims 5 or 6, wherein the interference comprises an interfering signal having a given frequency, and wherein the notification is indicative of the given frequency of the interfering signal.

**8.** The method for data transmission according to one of claims 5 to 7, wherein a far end of the optical fiber is coupled to a receiver that recovers the data streams from the combined beam, and wherein receiving the notification comprises receiving the notification from the receiver responsively to the receiver detecting the interference occurring due to FWM; or
wherein receiving the notification comprises receiving the notification over a sideband channel implemented as an in-band channel over the optical fiber.

**9.** A receiver, comprising,

an optical de-multiplexer, configured to receive from a transmitter, over an optical fiber, a combined beam that combines at least three modulated Tx light beams produced by at least three respective laser sources at different carrier frequencies, and to split the combined beam into at least three Rx light beams corresponding respectively to the modulated Tx light beams;
a Front-End (FE) module, configured to convert the Rx light beams into corresponding Rx digital signals; and
a processor, configured to recover a data stream from each Rx digital signal while detecting interference in the Rx digital signal due to Four-Wave Mixing (FWM) in the optical fiber, and to send to the transmitter a notification indicative of the interference for adjusting one or more of the carrier frequencies in order to mitigate the interference due to FWM.

**10.** The receiver according to claim 9, wherein the Rx digital signals belong to respective channel bands, and wherein the processor is configured to detect the interference due to FWM by detecting interference having attributes corresponding to FWM falling in a given channel band associated with the Rx digital signal; and/or
wherein the processor is configured to include in the notification an indication of an attribute of the interference due to FWM enabling the transmitter to calculate an adjustment to a carrier frequency of at least one of the laser sources to cause interference due to FWM in subsequent transmitted signals to fall outside at least the given channel band.

**11.** The receiver according to claim 9 or 10, wherein the optical fiber is associated with a zero-dispersion frequency to, and wherein the processor is configured to include in the notification information indicative of a modification to be applied to one or more of the carrier frequencies to cause FWM to fall outside a specified frequency range that includes to; or

wherein the processor is configured to iteratively send multiple notifications to the transmitter to mitigate the interference, and after sending a given notification, to check whether the interference has reduced below a specified interference threshold; or
wherein the processor is configured to apply to the Rx digital signal an adaptive Feed-Forward Equalizer (FFE) filter comprising multiple taps, and to detect the interference depending at least on coefficient values of the taps.

**12.** A method for data reception, comprising,

in a receiver, receiving from a transmitter over an optical fiber, a combined beam that combines at least three modulated Tx light beams produced by at least three respective laser sources at different carrier frequencies, and splitting the combined beam into at least three Rx light beams corresponding respectively to the modulated Tx light beams;
converting the Rx light beams into corresponding Rx digital signals; and
recovering a data stream from each Rx digital signal while detecting interference in the Rx digital signal due to Four-Wave Mixing (FWM) in the optical fiber, and sending to the transmitter a notification indicative of the interference for adjusting one or more of the carrier frequencies in order to mitigate the interference due to FWM.

**13.** The method for data reception according to claim 12, wherein the Rx digital signals belong to respective channel bands, and comprising detecting the interference due to FWM by detecting interference having attributes corresponding to FWM falling in a given channel band associated with the Rx digital signal; and/or
comprising including in the notification an indication of an attribute of the interference due to FWM enabling the transmitter to calculate an adjustment to a carrier frequency of at least one of the laser sources to cause interference due to FWM in subsequent transmitted signals to fall outside at least the given channel band.

**14.** The method for data reception according to claim 12 or 13, wherein the optical fiber is associated with a zero-dispersion frequency to, and comprising including in the notification information indicative of a modification to be applied to one or more of the carrier frequencies to cause FWM to fall outside a specified frequency range that includes to; or

comprising iteratively sending multiple notifications to the transmitter to mitigate the interference, and after sending a given notification, checking whether the interference has reduced below a specified interference threshold0; or
comprising applying to the Rx digital signal an adaptive Feed-Forward Equalizer (FFE) filter comprising multiple taps, and detecting the interference depending at least on coefficient values of the taps.

**15.** A system for data communication comprising:

a transmitter, comprising,
at least three tunable laser sources, configured to receive respective data streams, and to output respective Tx light beams at different respective carrier frequencies, modulated with the respective data streams;
an optical multiplexer, configured to combine the multiple Tx light beams to produce a combined beam formed of the modulated Tx light beams at the different carrier frequencies, and to transmit the combined beam over an optical fiber; and
a Tx processor, configured to receive a notification indicative of an interference occurring due to Four-Wave Mixing (FWM) in the optical fiber, and to modify at least one of the carrier frequencies responsively to the notification; and
a receiver, comprising,
an optical de-multiplexer coupled to the transmitter via the optical fiber, configured to receive from the transmitter, over the optical fiber, the combined beam that combines the at least three modulated Tx light beams produced by the at least three respective laser sources at the different carrier frequencies, and to split the combined beam into at least three Rx light beams corresponding respectively to the modulated Tx light beams;
a Front-End (FE) module, configured to convert the Rx light beams into corresponding Rx digital signals; and
a Rx processor, configured to recover a data stream from each Rx digital signal while detecting interference in the Rx digital signal due to Four-Wave Mixing (FWM) in the optical fiber, and to send to the transmitter the notification indicative of the interference for adjusting one or more of the carrier frequencies in order to mitigate the interference due to FWM.

FIG. 1

EP 4 336 749 A1

*FIG. 2*

Hffe

MARGIN
117a

117

FREQUENCY

*FIG. 2A*

Hffe

118

NOTCH THRESHOLD

118b

118a

FREQUENCY

F'

*FIG. 2B*

Hcmb

119a

119b

PEAK THRESHOLD

FREQUENCY

119

F'

*FIG. 2C*

FIG. 3A

PHASE MATCHING SHAPE

f0 DISTRIBUTION

EQUAL SPACING 10nm

WAVELENGTH (nm)

1290  1300  1310  1320

FIG. 3B

UNEQUAL SPACING

WAVELENGTH (nm)

1300 ) 1310.2
1303.4    1324.1

FIG. 3C

EQUAL SPACING 4nm

WAVELENGTH (nm)

1292
1296   1300
1304

FIG. 3D

EQUAL SPACING 10nm

WAVELENGTH (nm)

1290  1300  1310  1320

1240  1250  1260  1270

PRODUCE AN OPTICAL WDM SIGNAL, USING LASERS TUNED TO RESPECTIVE CARRIER FREQUENCIES, AND TRANSMIT THE WDM SIGNAL TO THE RECEIVER OVER THE OPTICAL FIBER

*200*

RECEIVE A NOTIFICATION FROM THE RECEIVER, OVER A SIDEBAND CHANNEL, REPORTING A FWM INTERFERENCE — 204

ADJUST THE CARRIER FREQUENCIES BASED ON THE NOTIFICATION — 208

TRANSMITTER

*FIG. 4A*

*FIG. 4B*

RECEIVER

RECEIVE A WDM SIGNAL FROM THE TRANSMITTER OVER THE OPTICAL FIBER — 250

DIGITALLY RECOVER DATA STREAMS CARRIED BY THE OPTICAL WDM SIGNAL WHILE CHECKING FOR FWM INTERFERENCE — 254

*258*

NO — FWM INTERFERENCE DETECTED?

YES

CONTROL: DETERMINE ADJUSTMENTS TO THE CARRIER FREQUENCIES TO MITIGATE THE FWM INTERFERENCE — 262

*266*

SEND TO THE TRANSMITTER, E.G., OVER A SIDEBAND CHANNEL, A NOTIFICATION REPORTING THE ADJUSTED CARRIER FREQUENCIES

Europäisches
Patentamt

European
Patent Office

Office européen
des brevets

# EUROPEAN SEARCH REPORT

**Application Number**

**EP 23 19 6362**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/183294 A1 (VILLARRUEL FERNANDO XAVIER [US] ET AL) 22 July 2010 (2010-07-22) * paragraphs [0021] – [0033] * * paragraphs [0043] – [0055] * * paragraphs [0067] – [0069] * * paragraph [0072] * * paragraph [0074] * * figures 1, 7, 9 * | 1-15 | INV. H04B10/079 H04B10/2563 H04J14/02 |
| X | US 2020/044414 A1 (FUNADA TOMOYUKI [JP] ET AL) 6 February 2020 (2020-02-06) * paragraph [0004] * * paragraph [0009] * * paragraphs [0025] – [0041] * * paragraphs [0050] – [0052] * * paragraphs [0059] – [0061] * * paragraph [0067] * * paragraphs [0071] – [0084] * * paragraph [0092] * * paragraph [0095] * * figures 1,2 ,4, 12, 13 * | 1-3,5-7 | |
| | | | **TECHNICAL FIELDS SEARCHED (IPC)** H04B H04J |

The present search report has been drawn up for all claims

| Place of search | Date of completion of the search | Examiner |
|---|---|---|
| Munich | 11 January 2024 | Rolan Cisneros, E |

EPO FORM 1503 03.82 (P04C01)

## ANNEX TO THE EUROPEAN SEARCH REPORT
## ON EUROPEAN PATENT APPLICATION NO.

EP 23 19 6362

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2024

| Patent document cited in search report | Publication date | Patent family member(s) | Publication date |
|---|---|---|---|
| US 2010183294 A1 | 22-07-2010 | US 2010183294 A1 | 22-07-2010 |
| | | WO 2010083102 A1 | 22-07-2010 |
| US 2020044414 A1 | 06-02-2020 | CN 110114989 A | 09-08-2019 |
| | | JP WO2018123122 A1 | 31-10-2019 |
| | | US 2020044414 A1 | 06-02-2020 |
| | | WO 2018123122 A1 | 05-07-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63404561

**Non-patent literature cited in the description**

- **RODES.** *On Technical Feasibility of 800G-LR4 with Direct-Detection,* 29 March 2022